# EUROPEAN PATENT APPLICATION

(11) **EP 4 819 283 A1**
(43) Date of publication of application: **07.10.2026**
(21) Application number: 24897667.2
(22) Date of filing: 28.11.2024
(51) Int. Cl.: H01M 10/0568, H01G 11/56, H01G 11/62, H01G 11/84, H01M 4/13, H01M 4/62, H01M 10/052, H01M 10/058, H01M 10/0562, H01M 10/0565

(54) **NON-AQUEOUS ELECTROLYTIC SOLUTION, COMPOSITION, POWER STORAGE ELEMENT, METHOD FOR MANUFACTURING NON-AQUEOUS ELECTROLYTIC SOLUTION, AND METHOD FOR MANUFACTURING POWER STORAGE ELEMENT**

(30) Priority: 28.11.2023 JP 2023200311
(71) Applicant: Niterra Co., Ltd., Nagoya-shi, Aichi 461-0005 (JP)
(72) Inventor: WATANABE, Yuu, Nagoya-shi, Aichi 461-0005 (JP); KAJIURA, Ryunosuke, Nagoya-shi, Aichi 461-0005 (JP); KATAOKA, Kazuki, Nagoya-shi, Aichi 461-0005 (JP); KITAMURA, Masahiro, Nagoya-shi, Aichi 461-0005 (JP); SUZUKI, Akihiro, Nagoya-shi, Aichi 461-0005 (JP)
(74) Representative: Zimmermann & Partner Patentanwälte mbB
(86) International application number: PCT/JP2024/042231
(87) International publication number: WO 2025/115983

(57) **Abstract**

To provide a non-aqueous electrolytic solution in which the impurity content can be regulated, a composition, a power storage element, method for producing the non-aqueous electrolytic solution, and a method for producing the power storage element. The non-aqueous electrolytic solution contains hexafluorophosphate ion, in which the ratio of an integrated value of a peak attributed to difluorophosphate ion observed in a ³¹P nuclear magnetic resonance spectrum to an integrated value of a peak attributed to hexafluorophosphate ion is less than 0.1%, and which exhibits an absorbance of 2 or greater at wavelength 300 nm in an ultraviolet visible absorption spectrum measured with an optical path length of 10 mm and at 25°C±2°C. The method for producing a non-aqueous electrolytic solution, includes a preparation step of preparing a first non-aqueous electrolytic solution containing hexafluorophosphate ion, and a treatment step of bringing an oxide-based solid electrolyte which exhibits an ionic conductivity into contact with a first non-aqueous electrolytic solution, to thereby yield a second non-aqueous electrolytic solution.

## Description

### TECHNICAL FIELD

The present invention relates to a non-aqueous electrolytic solution, to a composition, to a power storage element, to a method for manufacturing a non-aqueous electrolytic solution, and to a method for manufacturing a power storage element.

### BACKGROUND ART

Hexafluorophosphate ion, having a relatively large ionic radius and a high degree of dissociation, is employed in an electrolyte of a non-aqueous electrolytic solution and particularly as a lithium salt in a power storage element. Reacting with residual water in a non-aqueous electrolytic solution, hexafluorophosphate ion provides impurities such as difluorophosphate ion. Such impurities are known to adversely affect the ionic conductivity of a non-aqueous electrolytic solution and the interfacial resistance and low-temperature characteristics of electrodes. Patent Literature 1 discloses a related technique which includes subjecting a commercial solvent to high-performance distillation, treating the distillate with molecular sieve to prepare a non-aqueous solvent, and dissolving lithium hexafluorophosphate which has been subjected to a vacuum heat treatment in the non-aqueous solvent, to thereby regulate the fluorine-containing impurity content of the non-aqueous electrolytic solution.

### CITATION LIST

### PATENT LITERATURE

Patent Literature 1: JPH10-144345A

### SUMMARY OF INVENTION

### TECHNICAL PROBLEM

There is still demand for a technique for regulating the impurity content of a non-aqueous electrolytic solution as the disclosed related technique.

The present invention has been accomplished to meet the above demand. Thus, objects of the invention are to provide a non-aqueous electrolytic solution in which the impurity content can be regulated, a composition, a power storage element, a method for producing the non-aqueous electrolytic solution, and a method for producing the power storage element.

### SOLUTION TO PROBLEM

A first aspect for attaining one of the objects is directed to a non-aqueous electrolytic solution containing hexafluorophosphate ion in which solution a ratio of an integrated value of a peak attributed to difluorophosphate ion observed in a ³¹P nuclear magnetic resonance spectrum to an integrated value of a peak attributed to hexafluorophosphate ion is 0.3% or less.

A second aspect is directed to the first aspect, in which the non-aqueous electrolytic solution has a difluorophosphate ion concentration lower than 250 ppm.

A third aspect is directed to the first or second aspect, in which the non-aqueous electrolytic solution exhibits an absorbance of 2 or greater at wavelength 300 nm in an ultraviolet visible absorption spectrum measured with an optical path length of 10 mm and at 25°C±2°C.

A fourth aspect is directed to a composition containing a non-aqueous electrolytic solution as recited in any of the first to third aspects, and an oxide-based solid electrolyte which is in contact with the non-aqueous electrolytic solution and which exhibits an ionic conductivity.

A fifth aspect is directed to a power storage element which includes a non-aqueous electrolytic solution as recited in any of the first to third aspects or a composition as recited in the fourth aspect.

A sixth aspect is directed to a method for producing a non-aqueous electrolytic solution, which method includes a preparation step of preparing a first non-aqueous electrolytic solution containing hexafluorophosphate ion, and a treatment step of bringing an oxide-based solid electrolyte which exhibits an ionic conductivity into contact with a first non-aqueous electrolytic solution, to thereby yield a second non-aqueous electrolytic solution.

A seventh aspect is directed to the non-aqueous electrolytic solution production of the sixth mode, in which, when analysis is performed through reverse phase liquid chromatography/mass spectrometry employment of an aqueous solution-based eluent under common conditions, the area of a peak observed at a retention time shorter than the retention time when a peak attributed to hexafluorophosphate ion emerges is larger in the case of the second non-aqueous electrolytic solution than in the case of the first non-aqueous electrolytic solution.

An eighth mode is directed to the non-aqueous electrolytic solution production of the sixth or seventh mode, in which, regarding a self-diffusion coefficient of a cation excepting proton determined through pulsed field gradient nuclear magnetic resonance spectrometry at 25°C±2°C , the self-diffusion coefficient in the second non-aqueous electrolytic solution is 0.9 times or more and 1.1 times or less the self-diffusion coefficient in the first non-aqueous electrolytic solution.

A ninth aspect is directed to any of the sixth to eighth aspects, in which the second non-aqueous electrolytic solution exhibits an absorbance of 2 or greater at wavelength 300 nm in an ultraviolet visible absorption spectrum measured with an optical path length of 10 mm and at 25°C±2°C.

A tenth aspect is directed to a method for producing a power storage element, the method employing the second non-aqueous electrolytic solution prepared through a non-aqueous electrolytic solution production method as recited in any of the sixth to ninth aspects.

### ADVANTAGEOUS EFFECTS OF INVENTION

The non-aqueous electrolytic solution of the present invention containing hexafluorophosphate ion in which solution a ratio of an integrated value of a peak attributed to difluorophosphate ion observed in a ³¹P nuclear magnetic resonance spectrum to an integrated value of a peak attributed to hexafluorophosphate ion is 0.3% or less. Though employment of the non-aqueous electrolytic solution having the above properties, a power storage element in which the impurity amount is suppressed can be yielded.

### BRIEF DESCRIPTION OF DRAWINGS

[FIG. 1] Cross-sectional view of a power storage element of a first embodiment.
[FIG. 2] Schematic view of a garnet-type crystal structure.
[FIG. 3] Cross-sectional view of a power storage element of a second embodiment.

### DESCRIPTION OF EMBODIMENTS

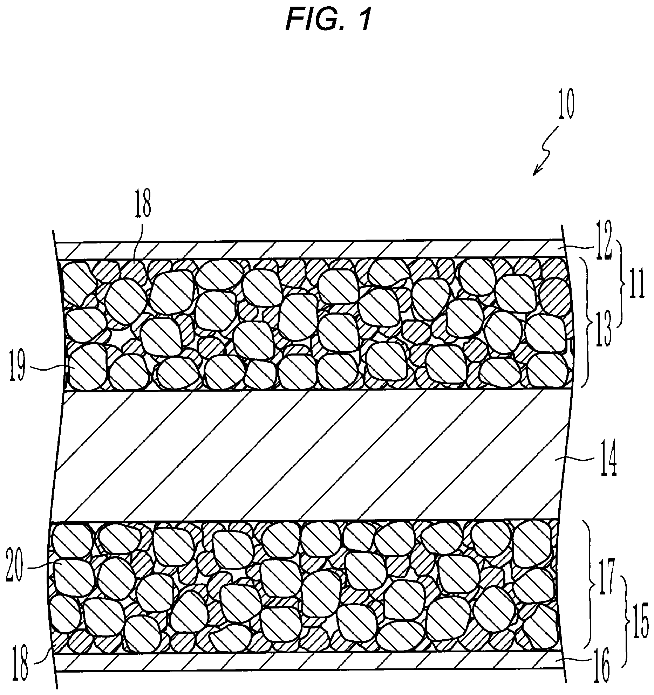

Hereinafter, preferred embodiments of the present invention will be described with reference to attached drawings. FIG. 1 is a schematic cross-section of a power storage element 10 of a first embodiment. The power storage element 10 is an element in which mutual conversion between chemical energy and electrical energy is involved. Examples of the ion species involved in energy conversion of the storage element 10 (hereinafter referred to as an "electric charge carrier") include cations such as Li⁺, Na⁺, K⁺, Mg²⁺, Cu⁺, and Ag⁺.

Examples of the power storage element 10 include secondary batteries such as a lithium ion battery, a sodium ion battery, a potassium ion battery, a magnesium ion battery, and a calcium ion battery; and an electrochemical capacitor. Examples of the electrochemical capacitor include an electric double-layer capacitor, a redox capacitor employing electrode redox reaction or redox reaction which involves ions in the non-aqueous electrolytic solution, and a hybrid capacitor based on a combination of an electric double-layer and redox reaction or a combination thereof with a secondary battery material.

The power storage element 10 includes a positive electrode 11, a separator 14, and a negative electrode 15 in that stacking order. The separator 14 has durability to active materials 19 and 20 and a non-aqueous electrolytic solution contained in the positive electrode 11 and the negative electrode 15 and is formed of a porous body which allows passage of electric charge carriers but has no electron conductivity. Examples of the separator 14 include a nonwoven fabric and a porous membrane formed of cellulose, polypropylene, polyethylene, polyimide, alumina, etc.

The positive electrode 11 includes an active material layer 13 and a current-collector 12 stacked thereon. The current-collector 12 is a member having an electrical conductivity. Examples of the material of the current-collector 12 include metals selected from among Ni, Ti, Fe, and Al; alloys each containing two or more of such metal elements; stainless steel; and carbon material.

The active material layer 13 contains an active material 19. The active material 19 is appropriately chosen in accordance with the types of the electric charge carrier and power storage element. In the case where the power storage element is an electrochemical capacitor, a material that can support anions in a reversible manner is employed as the material of the active material 19. Examples of such a material include carbonaceous materials such as porous carbon, natural carbon, artificial carbon, easy-to-graphitize carbon (i.e., hard carbon), hard-to-graphitize carbon (i.e., soft carbon), and carbon fiber.

In the case in which the power storage element is an ion battery, examples of the active material 19 include a metal oxide in which the metal includes a transition metal, a sulfur-containing active material, and an organic active material. In the case where the electric charge carrier is Li⁺, examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include LiCoO₂, LiNi_{0.8}Co_{0.15}Al_{0.05}O₂, LiMn₂O₄, LiNiVO₄, LiNi_{0.5}Mn_{1.5}O₂, LiNi_{1/3}Mn_{1/3}Co_{1/3}O₂, and LiFePO₄.

Examples of the sulfur-containing active material include S, TiS₂, NiS, FeS₂, Li₂S, MoS₃, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

For lowering the electrical resistance of the active material layer 13, the active material layer 13 may contain a conducting aid. Examples of the conducting aid include carbon black, acetylene black, Ketjen black, carbon fiber, Ni, Pt, and Ag.

In the present embodiment, the active material layer 13 contains a composition. The composition contains an oxide solid electrolyte 18 and a non-aqueous electrolytic solution. The solid electrolyte has ion conductivity. Examples of the material of the solid electrolyte 18 include an oxide having a NASICON-type structure, an oxide having a perovskite structure, and an oxide having a garnet-type structure. Examples of the oxide having a NASICON-type structure include an oxide at least including Li, M (M represents at least one element selected from Ti, Zr, and Ge) and P (e.g., Li(Al,Ti)₂(PO₄)₃ and Li(Al,Ge)₂(PO₄)₃). Examples of the oxide having a perovskite structure, include an oxide at least including Li, Ti, and La (e.g., La_{2/3-X}Li_{3X}TiO₃).

The solid electrolyte 18 is preferably formed of a complex oxide having a garnet-type crystal structure including Li, La, and Zr, since the complex oxide has strong basicity, achieves an ion conductivity on the order of 10⁻³ S/cm, and has reduction resistance to metallic lithium. The garnet-type crystal structure is represented by a general formula C₃A₂B₃O₁₂.

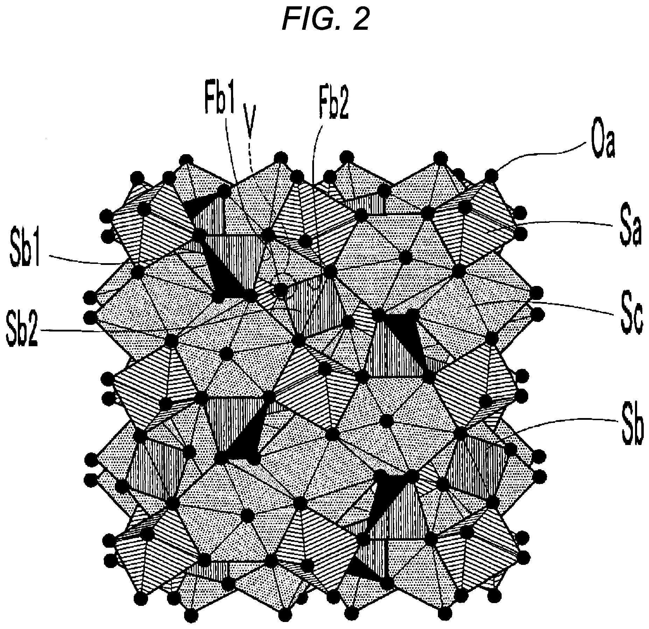

FIG. 2 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The oxide solid electrolyte generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in Li₇La₃Zr₂O₁₂ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 (Li₇La₃Zr₂O₁₂) of CSD (Cambridge Structural Database). As compared with No. 422259, the solid electrolyte may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753).

A typical example of the material of the solid electrolyte having a garnet-type crystal structure is Li₇La₃Zr₂O₁₂. In the solid electrolyte, a part of the elements forming Li₇La₃Zr₂O₁₂ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the solid electrolyte include Li₆La₃Zr_{1.5}W_{0.5}O₁₂, Li_{6.15}La₃Zr_{1.75}Ta_{0.25}Al_{0.2}O₁₂, Li_{6.15}La₃Zr_{1.75}Ta_{0.25}Ga_{0.2}O₁₂, Li_{6.25}La₃Zr₂Ga_{0.25}O₁₂, Li_{6.4}La₃Zr_{1.4}Ta_{0.6}O₁₂, Li_{6.5}La₃Zr_{1.75}Te_{0.25}O₁₂, Li_{6.75}La₃Zr_{1.75}Nb_{0.25}O₁₂, Li_{6.9}La₃Zr_{1.675}Ta_{0.289}Bi_{0.036}O₁₂, Li_{6.46}Ga_{0.23}La₃Zr_{1.85}Y_{0.15}O₁₂, Li_{6.8}La_{2.95}Ca_{0.05}Zr_{1.75}Nb_{0.25}O₁₂, Li_{7.05}La_{3.00}Zr_{1.95}Gd_{0.05}O₁₂, and Li_{6.20}Ba_{0.30}La_{2.95}Rb_{0.05}Zr₂O₁₂.

Particularly, the solid electrolyte preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte preferably contains both Mg and element A, and satisfies all the following conditions (4) to (6) regarding mole proportions of the elements. From the viewpoint of elevating the ion conductivity of the solid electrolyte, element A is preferably Sr. $1.33 \leq Li / \left(La+A\right) \leq 3$ (1) $0 \leq Mg / \left(La+A\right) \leq 0.5$ (2) $0 \leq A / \left(La+A\right) \leq 0.67$ (3) $2.0 \leq Li / \left(La+A\right) \leq 2.6$ (4) $0.01 \leq Mg / \left(La+A\right) \leq 0.14$ (5) $0.04 \leq A / \left(La+A\right) \leq 0.17$ (6)

A further description will be made with reference again to FIG. 1. The non-aqueous electrolytic solution contained in the active material layer 13 serves as a medium in which electric charge carriers move and is a solution in which an electrolyte is dissolved in a non-aqueous solvent. Examples of the electrolyte include a compound composed of an electric charge carrier (an anion) and a cation. A non-aqueous solvent is generally categorized to a molecular solvent whose most part is formed of molecules, and an ionic liquid composed of a cation and an anion. As compared with an aqueous electrolytic solution containing water as a solvent, a non-aqueous electrolytic solution containing a non-aqueous solvent can widen the potential window.

The molecular solvent is preferably an aprotic solvent for widening the potential windows of the non-aqueous electrolytic solution. Examples of the aprotic solvent include a cyclic ester, a chain ester, an aliphatic carboxylate ester, a phosphate ester, a nitrile, an amide, a sulfur compound, a ketone, an ether, a nitro compound, a fluorous solvent, and a sulfone. A mixture thereof may also be used.

Examples of the cyclic ester include carbonate esters such as propylene carbonate, ethylene carbonate, butylene carbonate, vinylene carbonate, vinylethylene carbonate, and fluoroethylene carbonate, and lactones such as β-propiolactone, γ-butyrolactone, δ-valerolactone, α-pyrone, and coumarin. Examples of the chain ester include carbonate esters such as dimethyl carbonate, diethyl carbonate, and ethyl methyl carbonate. Examples of the aliphatic carboxylate ester include methyl formate, ethyl formate, methyl acetate, ethyl acetate, and ethyl propionate. Examples of the phosphate ester include trimethyl phosphate. Examples of the nitrile include acetonitrile, propionitrile, butyronitrile, and benzonitrile.

Examples of the amide include formamide, N-methylformamide, dimethylformamide, N-methylacetamide, dimethylacetamide, N-methylpropionamide, hexamethylphosphoramide, and N-methylpyrrolidone. Examples of the sulfur compound include dimethylsulfoxide, sulfolane, dimethylthioformamide, and N-methylthiopyrrolidone. Examples of the ketone include acetone, 4-methyl-2-pentanone, and acetylacetone.

Examples of the ether include tetrahydrofuran, 2-methyltetrahydrofuran, 2,5-dimethyltetrahydrofuran, monoglyme, diglyme, triglyme, and tetraglyme. Examples of the nitro compound include nitromethane and nitrobenzene. The fluorous solvent is a hydrocarbon compound in which a hydrogen atom is substituted by a fluorine atom, or a derivative of the hydrocarbon compound. Examples of the sulfone include trimethylene sulfone, tetramethylene sulfone (sulfolane), dimethyl sulfone, ethyl methyl sulfone, and ethyl isopropyl sulfone.

Dissolution of the electrolyte in a molecular solvent and reaction to release free ions more easily proceed, as the dielectric constant of the solvent increases, or solvation of ions more easily occurs. Thus, a solvent having a relatively high dielectric constant εᵣ (εᵣ>20) is preferred. Examples of the molecular solvent having a dielectric constant in excess of 20 include a cyclic ester, a nitrile, an amide, a sulfur compound, acetone, acetylacetone, a nitro compound, and a sulfone. Needless to say, a solvent having a dielectric constant in excess of 20 and that having a dielectric constant of 20 or lower may be mixed together for the purpose of adjusting the viscosity of the resultant solvent or for other reasons.

The ionic liquid is a compound composed of a cation and an anion and assumes liquid at ambient temperature and pressure. When the solvent of a non-aqueous electrolytic solution is an ionic liquid, flame resistance of the non-aqueous electrolytic solution can be enhanced. Suitably, the ionic liquid has a cation which is one or more species selected from the group consisting of ammonium, imidazolium, pyrrolidinium, and piperidinium.

No particular limitation is imposed on the anion component of the ionic liquid. Examples of the anion component include inorganic anions such as BF₄⁻ and N(SO₂F)₂⁻ and organic anions such as B(C₆H₅)₄⁻, CH₃SO₃⁻, CF₃SO₃⁻, N(SO₂CF₃)₂⁻, and N(SO₂C₄F₉)₂⁻.

The ionic liquid may also be a solvated ionic liquid. Examples of the solvated ionic liquid include a product of an electrolyte dissolved in a sulfone-based solvent such as sulfolane and a sulfolane derivative or a glyme-type solvent such as tetraglyme.

The non-aqueous electrolytic solution contains hexafluorophosphate ion (PF₆⁻). When the electric charge carrier is Li⁺, an example of the electrolyte is lithium hexafluorophosphate (LiPF₆). The non-aqueous electrolytic solution may further contain another anion other than hexafluorophosphate ion. Examples of such additional anions include BF₄⁻, ClO₄⁻, N(SO₂F)₂⁻, PO₃F⁻, and PO₂F₂⁻.

The non-aqueous electrolytic solution has an electrolyte concentration of 0.2 mol/dm³ or higher, preferably 0.5 mol/dm³ or higher, still more preferably 1.0 mol/dm³ or higher. As the electrolyte concentration increases, the number of solvent molecules coordinating with the electric charge carrier increases. As a result, the amount of non-coordinating solvent decreases, and coordination with the counter anion (i.e., ion association) becomes dominant. Thus, reductive decomposition of the non-aqueous electrolytic solution is suppressed, and oxidation potential rises, to thereby provide a wider potential window. The electrolyte concentration is preferably 4.0 mol/dm³ or lower, more preferably 2.0 mol/dm³ or lower. When the electrolyte concentration exceeds 4.0 mol/dm³, there is considerably observed tendency of a drop in ion conductivity due to an increase in viscosity of non-aqueous electrolytic solution.

The non-aqueous electrolytic solution production method includes a preparation step of preparing a first non-aqueous electrolytic solution containing hexafluorophosphate ion; and a treatment step of bringing the first non-aqueous electrolytic solution into contact with the solid electrolyte 18, to thereby yield a second non-aqueous electrolytic solution. It has already been known that, when water remains in the first non-aqueous electrolytic solution, hexafluorophosphate ion undergoes hydrolysis, and subsequent degradation reaction proceeds to form impurities such as monofluorophosphate ion (PO₃F²⁻) and difluorophosphate ion (PO₂F₂⁻). The impurities in the non-aqueous electrolytic solution adversely affect the ionic conductivity, the interfacial resistance of electrodes, and the low-temperature characteristics of the non-aqueous electrolytic solution. Thus, the impurity level of the non-aqueous electrolytic solution must be controlled.

In the treatment step, when the solid electrolyte 18 comes into contact with the first non-aqueous electrolytic solution, the impurity level of the second non-aqueous electrolytic solution is reduced. A conceivable mechanism of a decrease in impurity level of the second non-aqueous electrolytic solution includes contacting the basic solid electrolyte 18 with the first non-aqueous electrolytic solution to evoke degradation of impurities contained in the first non-aqueous electrolytic solution and adsorption of the degradation product (insoluble compounds) on the solid electrolyte 18. Even though a particular operation such as high-performance distillation of non-aqueous solvent is not conducted, a simple operation of bringing the solid electrolyte 18 into contact with the first non-aqueous electrolytic solution successfully controls the impurity level of the second non-aqueous electrolytic solution.

After the solid electrolyte 18 has been brought into contact with the first non-aqueous electrolytic solution, both the solid electrolyte 18 and the second non-aqueous electrolytic solution may be disposed in the active material layer 13. Alternatively, a second non-aqueous electrolytic solution formed by suspending microparticles of the solid electrolyte 18 in the first non-aqueous electrolytic solution may also be used. In a yet alternatively manner, after the solid electrolyte 18 has been brought into contact with the first non-aqueous electrolytic solution, the solid electrolyte 18 is separated from the second non-aqueous electrolytic solution, and only the separated second non-aqueous electrolytic solution is supplied to the active material layer 13. When a power storage element other than the power storage element 10 is fabricated, a second non-aqueous electrolytic solution may also be used. Examples of the means for separating the solid electrolyte 18 from the second non-aqueous electrolytic solution include filtration, sedimentation, and centrifugation.

Difluorophosphate ion is a typical impurity of the first non-aqueous electrolytic solution. When a ³¹P- NMR spectrum of the second non-aqueous electrolytic solution is measured through ³¹P nuclear magnetic resonance spectrometry (³¹P-NMR), the ratio of an area (i.e., an integrated value) of a peak (chemical shift: about -21 ppm) attributed to difluorophosphate ion to an area (i.e., an integrated value) of a peak (chemical shift: about - 146 ppm) attributed to hexafluorophosphate ion is 0.3% or less. The spectral feature is attributed to that the difluorophosphate ion level of the second non-aqueous electrolytic solution is more reduced as compared with the first non-aqueous electrolytic solution.

The absolute amount of difluorophosphate ion in the second non-aqueous electrolytic solution can be determined by adding a predetermined (known) amount of a standard substance to the second non-aqueous electrolytic solution and measuring a ³¹P- NMR spectrum. The difluorophosphate ion concentration of the second non-aqueous electrolytic solution is preferably lower than 250 wt. ppm, for the purpose of controlling the impurity level.

When the first non-aqueous electrolytic solution and the second non-aqueous electrolytic solution are subjected to reverse phase liquid chromatography/mass spectrometry employing an aqueous solution-based eluent, a peak emerges at a retention time shorter than the retention time when the peak attributed to hexafluorophosphate ion emerges. The ion species exhibits a retention time shorter than the retention time attributed to hexafluorophosphate ion, the ion species has an affinity to hydrophobic groups of the reverse phase column lower than that of hexafluorophosphate ion; i.e., a higher polarity. Thus, when both peak areas are compared with each other, the area exhibited by the second non-aqueous electrolytic solution is larger than that exhibited by the first non-aqueous electrolytic solution. Therefore, the relative amount of high-polarity ions increases with respect to the hexafluorophosphate ion in the second non-aqueous electrolytic solution, as compared with the first non-aqueous electrolytic solution.

Through contact of the solid electrolyte 18 with the first non-aqueous electrolytic solution, absorbance of the electrolytic solution considerably varies. The second non-aqueous electrolytic solution exhibits an absorbance greater than that of the first non-aqueous electrolytic solution. Preferably, the second non-aqueous electrolytic solution exhibits an absorbance of 2 or greater, at wavelength of 300 nm in an ultraviolet visible absorption spectrum measured at 25°C ± 2°C with an optical path length of 10 mm. Conceivably, an increase of ions having a polarity higher than that of hexafluorophosphate ion influences the absorbance in the wavelength range. Still conceivably, when an organic component contained in the non-aqueous electrolytic solution is involved in certain reaction with the solid electrolyte 18, a polymerizable compound which exhibits an absorption in the wavelength range is generated by surrounding difluorophosphate ion.

Self-diffusion coefficient D₂ of a cation (excepting proton) contained in the second non-aqueous electrolytic solution at 25°C±2°C, as determined through pulsed field gradient nuclear magnetic resonance spectrometry (PFG- NMR), is almost the same as self-diffusion coefficient D₁ of the same cation contained in the first non-aqueous electrolytic solution determined at the same temperature. D₂ falls within a range of 0.9D₁ to 1.1D₁. This indicates that the diffusion rate of a cation (electric charge carrier) contained in the second non-aqueous electrolytic solution is almost equivalent to that of a cation (electric charge carrier) contained in the first non-aqueous electrolytic solution.

The active material layer 13 may contain a binder for binding the active material 19. No particular limitation is imposed on the binder, so long as the binder can bind the active material 19. Examples of the binder include fluororesin, polyolefin, polyimide, polyvinylpyrrolidone, poly(vinyl alcohol), cellulose ether, and rubber-like polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

The ratio by volume (vol%) of the non-aqueous electrolytic solution with respect to the total volume of the non-aqueous electrolytic solution and the active material 19 contained in the active material layer 13 is preferably 10% or greater and 20% or less. The range is provided for lowering the interfacial resistance of the active material 19, serving as the field of charge/discharge reaction, while the equilibrium potential of the positive electrode 11 is secured.

When the active material layer 13 contains the solid electrolyte 18, the ratio by volume (vol%) of the solid electrolyte 18 with respect to the total volume of the solid electrolyte 18 and the active material 19 is preferably 15% or greater and 20% or less. The range is provided for securing the equilibrium potential of the positive electrode 11 and the interface of contact between the solid electrolyte 18 and the active material 19.

Each of the solid electrolyte 18, active material 19, and non-aqueous electrolytic solution contents (vol%) may be determined through analysis of a vision field (×5,000) selected at random from a cross-section of the active material layer 13 under a scanning electron microscope (SEM) equipped with an energy dispersive X-ray spectrometer (EDS). In the analysis, distribution of elements is characterized, or image analysis of a backscattered electron image is conducted in terms of contrast, to thereby determine the area attributed to each of the solid electrolyte 18, the active material 19, and the non-aqueous electrolytic solution. The relative area of the solid electrolyte 18 with respect to the sum of the area of the solid electrolyte 18 and that of the active material 19 is considered as the corresponding volume ratio, to thereby derive the solid electrolyte 18 content (vol%). Similarly, the relative area of the non-aqueous electrolytic solution with respect to the sum of the area of the active material 19 and that of the non-aqueous electrolytic solution is considered as the corresponding volume ratio, to thereby derive the non-aqueous electrolytic solution content (vol%).

The cross-section of the active material layer 13; i.e., a target of analysis, is a polished surface, a surface obtained through irradiation with a focused ion beam (FIB), or a surface obtained through ion milling. The polished surface is obtained by, for example, freezing the active material layer 13, or embedding the active material layer 13 in a 4-functional epoxy resin or the like to solidify, followed by polishing.

The negative electrode 15 includes the active material layer 17 and a current-collector 16 stacked thereon. The current-collector 16 is a member having an electrical conductivity. Examples of the material of the current-collector 16 include metals selected from among Ni, Ti, Fe, Cu, and Si; alloys each containing two or more of such metals; stainless steel; and carbon material.

The active material layer 17 contains the active material 20. In order to lower the resistance of the active material layer 17, the active material layer 17 may further contain a conducting aid. Examples of the conducting aid include carbon black, acetylene black, Ketjen black, carbon fiber, Ni, Pt, and Ag. In the present embodiment, the active material layer 17 contains the solid electrolyte 18.

No particular limitation is imposed on the material of the active material 20, so long as occlusion and release of the electric charge carrier can be achieved. The material of the active material 20 is appropriately chosen in accordance with the type of the electric charge carrier. Examples of the active material 20 include carbonaceous materials (such as porous carbon, natural carbon, artificial carbon, easy-to-graphitize carbon, hard-to-graphitize carbon, and carbon fiber), Li₄Ti₅O₁₂, Si, Si-Li alloy, a compound containing Si and O as constituent elements (hereinafter referred to as "SiOx," wherein 0.5≤X≤1.5), metallic lithium, lithium alloys (such as Li-Al alloy, Li-Sn alloy, Li-Si alloy, Li-Mg alloy, and Li-Si alloy), In-Sb alloy, and Si-Li alloy. Examples of the SiOx include Si oxide and a structure of microcrystalline or amorphous Si dispersed in amorphous SiO₂ matrix.

The power storage element 10 is fabricated through, for example, the following procedure. Specifically, the solid electrolyte 18, the active material 19, and a conducting aid are mixed together, and a solution of a binder dissolved in a solvent is added to the mixture, to thereby prepare a slurry. The slurry is applied onto the current-collector 12, followed by drying, to thereby yield a positive electrode sheet.

Separately, the solid electrolyte 18, the active material 20, and the conducting aid are mixed together, and a solution of a binder dissolved in a solvent is added to the mixture, to thereby prepare a slurry. The slurry is applied onto the current-collector 16, followed by drying, to thereby yield a negative electrode sheet.

While a separator 14 which separates the positive electrode sheet from the negative electrode sheet, the positive electrode sheet, and the negative electrode sheet are stacked, these members are wound by means of a winding device, to thereby provide a cylindrical or square cell. A terminal (not illustrated) is connected to each of the current-collectors 12 and 16, and a second non-aqueous electrolytic solution is charged into a container (not illustrated) accommodating the cell. The container is closely sealed, to thereby yield the power storage element 10 including the positive electrode 11, the separator 14, and the negative electrode 15.

Since the power storage element 10 contains a second non-aqueous electrolytic solution in which the impurity (e.g., difluorophosphate ion) level has been controlled, the device will advantageously provide ionic conductivity, electrode interfacial resistance, low-temperature characteristics, etc..

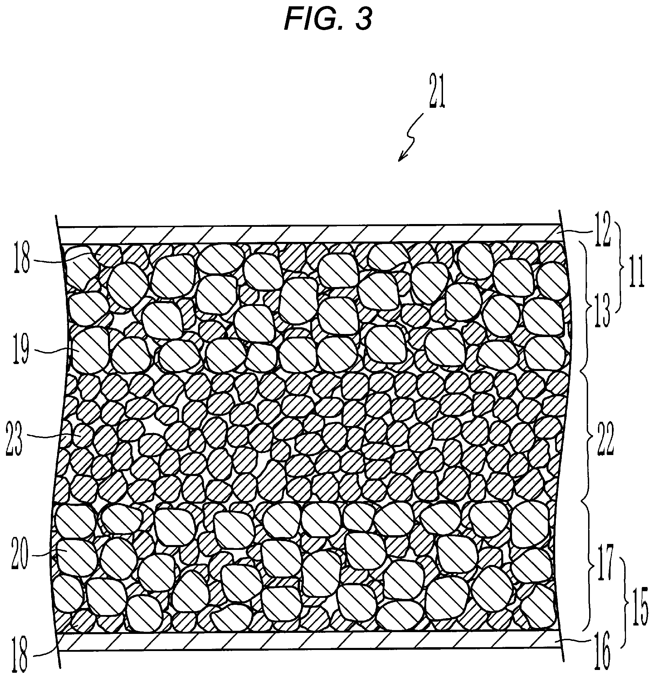

With reference to FIG. 3, a second embodiment will next be described. The above-described first embodiment corresponds to the case in which the separator 14 separating the positive electrode 11 from the negative electrode 15 is made of nonwoven fabric or porous membrane which is formed of cellulose, polypropylene, or the like. In the second embodiment, there is described a power storage element 21 in which a separator 22 separating the positive electrode 11 from the negative electrode 15 contains an electrolyte 23. Notably, in the second embodiment, the same members as employed in the first embodiment are denoted by the same reference numbers, and overlapping descriptions will be omitted.

FIG. 3 is a cross-sectional view of the power storage element 21 in the second embodiment. The power storage element 21 includes, from top to bottom, a positive electrode 11, a separator 22, and a negative electrode 15. The separator 22 contains an electrolyte 23. Examples of the electrolyte 23 include an electrolyte in the form of ion-conductive solid or gel. Alternatively, a mixture of the electrolyte 23 and a non-aqueous electrolytic solution may be placed in the separator 22.

The electrolyte 23 includes one or more species selected from the group consisting of a sulfide-type electrolyte, an oxide-type electrolyte, a hydride-type electrolyte, a halide-type electrolyte, and an organic electrolyte. Examples of the sulfide-type electrolyte include a crystalline thio-LISICON type, an Li₁₀GeP₂S₁₂ type, an argyrodite type, an Li₇P₃S₁₁ type, and a glass- or glass ceramic-type typically Li₂S-P₂S₅. Examples of the oxide-type electrolyte include an oxide having a NASICON-type structure, an oxide having a perovskite-type structure, and an oxide having a garnet-type structure.

Examples of the hydride-type electrolyte include a solid solution of LiBH₄ with a lithium halide compound (LiI, LiBr, or LiCl) or lithium amide (LiNH₂). Examples of the halide-type solid electrolyte include Li₃YCl₆. Examples of the organic solid electrolyte include polyethylene oxide, polypropylene oxide, and polyacrylonitrile.

The power storage element 21 is fabricated through, for example, the following procedure. Firstly, a non-aqueous electrolytic solution is mixed with the solid electrolyte 18, and the mixture is further mixed with the active material 19. Then, the resultant mixture is further mixed with a solution formed by dissolving a binder in a solvent, to thereby prepare a slurry. The slurry is applied onto the current-collector 12, followed by drying, to thereby yield the active material layer 13.

Separately, a non-aqueous electrolytic solution and an electrolyte 23 are mixed, and the resultant mixture is further mixed with a solution formed by dissolving a binder in a solvent, to thereby prepare a slurry for providing a separator. The slurry for providing a separator is applied onto the active material layer 13, followed by drying, to thereby yield a positive electrode sheet.

Yet separately, a non-aqueous electrolytic solution and the solid electrolyte 18 are mixed, and the resultant mixture is further mixed with an active material 20. Then, the resultant mixture is further mixed with a solution formed by dissolving a binder in a solvent, to thereby prepare a slurry. The slurry is applied onto the current-collector 16, followed by drying, to thereby yield an active material layer 17. Then, the slurry for providing a separator is applied onto the active material layer 17, followed by drying, to thereby yield a negative electrode sheet.

The positive electrode sheet and the negative electrode sheet are cut into shapes of interest, respectively. The positive electrode sheet and the negative electrode sheet are stacked so that the separator 22 intervenes between the positive electrode 11 and the negative electrode 15. The stacked product is pressed, to thereby fabricate a cell. A terminal (not illustrated) is connected to each of the current-collectors 12 and 16, and the product is placed in a container (not illustrated), then closing the container, whereby the power storage element 21 including the positive electrode 11, the separator 22, and the negative electrode 15 is fabricated.

Since the power storage element 21 of the second embodiment contains a non-aqueous electrolytic solution in the positive electrode 11, the negative electrode 15, and the separator 22, similar to the power storage element 10 of the first embodiment, the device will advantageously provide ionic conductivity, electrode interfacial resistance, low-temperature characteristics, etc.

### EXAMPLES

The present invention will next be described in more detail by way of Examples, which should not be construed as limiting the invention thereto.

### (Preparation of solid electrolyte)

Li₂CO₃, MgO, La(OH)₃, SrCO₃, and ZrO₂ were weighed in specific amounts so as to form Li_{6.95}Mg_{0.15}La_{2.75}Sr_{0.25}Zr_{2.0}O₁₂. In consideration of volatilization of Li during firing, the amount of Li₂CO₃ was adjusted in about 15 mol% excess (as reduced to Li). The thus-weighed raw materials and ethanol were put into a nylon-made pot with zirconia balls, and the mixture was subjected to pulverization with the ball mill for 15 hours. The resultant slurry was removed from the pot and dried, and then fired on an MgO plate at 1,100°C for 15 hours. After firing, the powder was further pulverized and put into a sheath made of MgO. Further firing was conducted at 1,100°C for 4 hours. After the additional firing operation, the powder was further pulverized in a glove box under argon, to thereby yield an oxide (hereinafter referred to as "LLZ").

Through a powder X-ray diffraction method, the crystal structure of the LLZ was determined to be a garnet type. The median diameter (D50) in particle size distribution of the LLZ, as determined through a laser diffraction/scattering method, was 74 µm.

The LLZ was further pulverized by means of a dry jet mill (Nano Jetmizer (registered trademark) NJ-50, product of Aishin Nano Technologies, Co., Ltd.). In pulverization, LLZ was caused to pass thrice through the jet mill at a jet nozzle pressure of 2.0 MPa and a milling rate of 480 g/hr in a nitrogen atmosphere, to thereby yield a first solid electrolyte. The first solid electrolyte was stored in an argon atmosphere (dew point: -70°C).

Through wet pulverization of LLZ, a powder-form second solid electrolyte was yielded. The second solid electrolyte was stored in an argon atmosphere (dew point: -70°C).

LLZTO (Li_{6.5}La₃Zr_{1.5}Ta_{0.5}O₁₂) was prepared, to thereby yield a powder-form third solid electrolyte. LATP (Li_{1.4}Al_{0.4}Ti_{1.6}(PO₄)₃) was prepared, to thereby yield a powder-form fourth solid electrolyte.

### (Example 1)

Ethylene carbonate, dimethyl carbonate, and ethyl methyl carbonate were mixed at proportions of 1:1:1 (by volume), and further mixed with vinylene carbonate (1 wt%), to thereby prepare a non-aqueous solvent. LiPF₆ serving as an electrolyte was mixed with the non-aqueous solvent so as to adjust a concentration to 1 mol/dm³, to thereby prepare a first non-aqueous electrolytic solution. To a test tube, the first non-aqueous electrolytic solution and the first solid electrolyte were added at a ratio of 5:1 (by mass), and the contents were intermittently shaken for 1 hour, to thereby prepare a non-aqueous electrolytic solution of Example 1. In the electrolytic solution in the test tube, a part of the first solid electrolyte was co-present as a suspension in a second non-aqueous electrolytic solution.

### (Example 2)

The first non-aqueous electrolytic solution and the first solid electrolyte were added to a test tube at a ratio of 5:1 (by mass), and the contents were intermittently shaken for 1 hour, followed by allowing the mixture to stand for 24 hours. By separating the first solid electrolyte through sedimentation, and the supernatant was recovered as the second non-aqueous electrolytic solution. The other part of the procedure was performed in the same manner as employed in Example 1, to thereby yield a non-aqueous electrolytic solution of Example 2.

### (Example 3)

The first non-aqueous electrolytic solution and the second solid electrolyte were added to a test tube at a ratio of 5:1 (by mass), and the contents were intermittently shaken for 1 hour, followed by allowing the mixture to stand for 24 hours. By separating the second solid electrolyte through sedimentation, and the supernatant was recovered as the second non-aqueous electrolytic solution. The other part of the procedure was performed in the same manner as employed in Example 1, to thereby yield a non-aqueous electrolytic solution of Example 3.

### (Example 4)

The first non-aqueous electrolytic solution and the third solid electrolyte were added to a test tube at a ratio of 5:1 (by mass), and the contents were intermittently shaken for 1 hour, followed by allowing the mixture to stand for 24 hours. By separating the third solid electrolyte through sedimentation, and the supernatant was recovered as the second non-aqueous electrolytic solution. The other part of the procedure was performed in the same manner as employed in Example 1, to thereby yield a non-aqueous electrolytic solution of Example 4.

### (Example 5)

The first non-aqueous electrolytic solution and the fourth solid electrolyte were added to a test tube at a ratio of 5:1 (by mass), and the contents were intermittently shaken for 1 hour, followed by allowing the mixture to stand for 24 hours. By separating the fourth solid electrolyte through sedimentation, and the supernatant was recovered as the second non-aqueous electrolytic solution. The other part of the procedure was performed in the same manner as employed in Example 1, to thereby yield a non-aqueous electrolytic solution of Example 5.

### (Comparative Examples)

The first non-aqueous electrolytic solution was employed as a non-aqueous electrolytic solution of Comparative Example.

### (Measurement of whole ion conductivity)

The whole ion conductivity of each of the non-aqueous electrolytic solutions of Examples 1 to 5 and Comparative Example was measured through the AC impedance method at a measurement temperature of 25°C. The whole ion conductivity of each of the non-aqueous electrolytic solutions of Examples 1 to 5 and Comparative Example was found to be the same value. Accordingly, the non-aqueous electrolytic solutions of Examples 1 to 5 and Comparative Example assumed to have the same hexafluorophosphate ion concentration.

### (Measurement of ³¹P- NMR spectra)

Each of the non-aqueous electrolytic solutions of Examples 1 to 5 and Comparative Example was placed in a sample tube foe solution (outer diameter: 5 mm) under argon, and a predetermined (known) amount of a standard substance was added to a non-aqueous electrolytic solution. A ³¹P NMR spectrum (³¹P- NMR spectrum) of each sample was measured by means of a nuclear magnetic resonance spectrometer (ECZ700R, product of JEOL). The non-aqueous electrolytic solution of Example 1 was prepared by shaking the test tube in which the first solid electrolyte was co-present, allowing the test tube to stand for 24 hours, separating the first solid electrolyte through sedimentation, and transferring the supernatant to a sample tube. The measurement in terms of proton was performed at an observation frequency of 700 MHz in the single pulse mode at a measurement temperature of 25°C.

The peak at a chemical shift about -144 pmm in the ³¹P- NMR spectrum was attributed to hexafluorophosphate ion, while the peak at a chemical shift about -19 pmm in the ³¹P-NMR spectrum was attributed to difluorophosphate ion. The ratio of the integrated value of the peak attributed to difluorophosphate ion with respect to the peak attributed to hexafluorophosphate ion (i.e., PO₂F₂⁻ fraction) was calculated. In addition, the difluorophosphate ion concentration (wt. ppm) was calculated from the integrated value of a signal attributed to the standard substance and that attributed to difluorophosphate ion. Table 1 shows the results.

**[Table 1]**

| No. | PO₂F₂⁻ fraction (%) | PO₂F₂⁻ concentration (wt ppm) |
|---|---|---|
| Ex. 1 | <0.01 | <10 |
| Ex. 2 | <0.01 | <10 |
| Ex. 3 | <0.01 | <10 |
| Ex. 4 | 0.02 | 19 |
| Ex. 5 | 0.25 | 210 |
| Com. Ex. | 0.4 | 353 |

As shown in Table 1, the ratio of the integrated value of the peak attributed to difluorophosphate ion to that attributed to hexafluorophosphate ion (i.e., PO₂F₂⁻ ratio) was 0.4% in Comparative Example and 0.3% or less in Examples 1 to 5. The difluorophosphate ion concentration was 353 wt. ppm in Comparative Example and lower than 250 wt. ppm in Examples 1 to 5. Conceivably, in the non-aqueous electrolytic solutions of Examples 1 to 5, difluorophosphate ion was removed through adsorption or degradation by the solid electrolyte.

In comparison of Examples 1 to 4 with Example 5, the PO₂F₂⁻ ratio and difluorophosphate ion concentration were lower in Examples 1 to 4 than in Example 5. Thus, the effect of removing difluorophosphate ion was found to be higher in the case of the solid electrolyte having a garnet-type crystal structure including Li, La, and Zr than in the case of LATP.

In comparison of Examples 1 to 3 with Example 4, the PO₂F₂⁻ ratio and difluorophosphate ion concentration were lower in Examples 1 to 3 than in Example 4. Thus, the effect of removing difluorophosphate ion was found to be higher in the case of the solid electrolyte having a garnet-type crystal structure including Li, La, and Zr, and Mg and Sr than in the case of the solid electrolyte having a garnet-type crystal structure including Li, La, and Zr, and Ta.

### (Measurement of absorbance)

The absorbance of each of the non-aqueous electrolytic solutions of Examples 1 and 2 and Comparative Example at a measurement wavelength of 300 nm in an ultraviolet visible absorption spectrum was measured by means of an ultraviolet/visible light spectrophotometer (Evolution201, product of Thermo Fisher Scientific). The non-aqueous electrolytic solution was placed in a quartz glass cell having an optical path length of 10 mm. The measurement temperature was 25°C.

In measurement of the absorbance of the non-aqueous electrolytic solution, a blank sample containing no non-aqueous electrolytic solution placed in a quartz glass cell was used, and correction of absorbance was performed such that the absorbance of the blank sample in the cell at a wavelength of 300 nm was adjusted to 0.

### (Measurement of chromatogram)

By means of a liquid chromatography/mass spectrometer (Water Synapt G2 HDMS), the non-aqueous electrolytic solutions of Examples 1 and 2 and Comparative Example were analyzed. Each non-aqueous electrolytic solution was 100-fold (by volume) diluted with pure water, to thereby provide a sample. The analytical conditions are generally as follows.
Column: ACQUITY UPLC BEH C18 (particle size: 1.7 µm, inner diameter: 2.1 mm, length: 50 mm, reverse phase)
Eluent: graded 10 mM aqueous ammonium acetate and acetonitrile/tetrahydrofuran (8:2) (compositional proportions: reference to Electrochemistry, 85(11), 721-727(2017))
Column temperature: 40°C
Sample injection: 5 µL
Mode of ionization: ESI
Mode of measurement: negative ion mode

In a total ion chromatogram, a peak at a retention time of about 2 minutes is attributed to hexafluorophosphate ion. Another peak at a retentions time of about 1.75 minutes, which was shorter than the retention time at which the peak attributed to hexafluorophosphate ion emerged. The area of the peak was found to be wider in non-aqueous electrolytic solutions of the Examples than in the non-aqueous electrolytic solution of Comparative Example. Since the above analytical feature was obtained by use of a reverse phase column, the peak at a retention time of about 1.75 minutes was attributed to an ion having a high polarity; i.e., a lower affinity with a hydrophobic group on the reverse phase column as compared with hexafluorophosphate ion. As a result, conceivably, the relative amount of a component having a polarity higher than that of hexafluorophosphate ion more increased in non-aqueous electrolytic solutions of the Examples, compared with the non-aqueous electrolytic solution of Comparative Example. The ion having a polarity higher than that of hexafluorophosphate ion is assumed as a reaction product between the first non-aqueous electrolytic solution and the solid electrolyte.

In analysis of a mass/chromatogram including difluorophosphate ion, the non-aqueous electrolytic solution of Comparative Example was found to have a total peak area (counts) of 105 and exhibit a peak attributed to difluorophosphate ion at a retention time of about 1.5 minutes. In contrast, the non-aqueous electrolytic solutions of the Examples were found to have a total peak area (counts) of 16 and exhibit only a noise-like peak. As a result, difluorophosphate ion in the non-aqueous electrolytic solutions of the Examples was considered to disappear.

### (Measurement of self-diffusion coefficient)

The self-diffusion coefficient of Li ions contained in each of the non-aqueous electrolytic solutions of Examples 1 and 2 and Comparative Example was measured at 25°C through pulsed field gradient nuclear magnetic resonance spectrometry by means of a nuclear magnetic resonance spectrometer (JNM-ECA600II, product of JEOL RESONANCE). In a specific procedure, a non-aqueous electrolytic solution was added to an outer tube of a symmetric microsample tube (outer diameter: 5 mm) to a height from the bottom of 5 mm, and the tube was tightly closed by inner tube of the microsample tube . By use of a probe for diffusion measurement, the sample was not rotated. The gradient of magnetic field was appropriately adjusted to fall within a range of 0.1 to 13.5 T/m. Based on the stimulated echo pulse series, the self-diffusion coefficient of a component containing 7-lithium (Li ions) was measured at 233.25 MHz. The pulse width of gradient of magnetic field, period of time of diffusion, recovery time after application of pulse of gradient of magnetic field, and integration frequency were modified in accordance with a signal detected.

After measurement of the self-diffusion coefficient, a ratio (D₂/D₁) of the self-diffusion coefficient of Li ions contained in each of the non-aqueous electrolytic solutions of Examples 1 and 2 (D₂) with respect to the self-diffusion coefficient of Li ions contained in the non-aqueous electrolytic solution of Comparative Example (D₁) was determined. Table 2 shows the results of measurements.

**[Table 2]**

| No. | Absorbance | D₂/D₁ |
|---|---|---|
| Example 1 | ≥3 | 1.05 |
| Example 2 | >3 | 1.05 |
| Comp. Ex. | ≤0.1 | - |

As is clear from Table 2, the obtained D₂/D₁ is 1.05, and the self-diffusion coefficient of Li ions are substantially constant in Examples 1 and 2 and in Comparative Example. If any component contained in a non-aqueous electrolytic solution undergoes considerable degradation reaction by an oxide-based solid electrolyte, the non-aqueous electrolytic solution would receive undesirable changes in composition and physical properties, possibly resulting in a change in diffusion behavior of Li ions. However, conceivably, the diffusion rate of Li ions (electric charge carriers) contained in each of the non-aqueous electrolytic solutions of Examples 1 and 2 are almost equivalent to the diffusion rate of Li ions contained in the non-aqueous electrolytic solution of Comparative Example. Thus, in the non-aqueous electrolytic solutions of the Examples, the difluorophosphoric acid concentration was found to be successfully controlled without a substantial change in diffusion behavior of Li ions.

The absorbance of the non-aqueous electrolytic solution of Comparative Example was 0.1 or less, but that of the non-aqueous electrolytic solutions of Examples 1 and 2 was 3 or more. The conceivable reason is as follows. Specifically, reaction between difluorophosphate ion and the solid electrolyte forms an ion species having a polarity higher than that of hexafluorophosphate ion. Conceivably, when the reaction product modifies the absorbance in the wavelength range or when an organic component contained in the non-aqueous electrolytic solution and the solid electrolyte undergo certain reaction, a polymerization product which exhibits an absorption in the wavelength range is generated by surrounding difluorophosphate ion.

According to the Examples, difluorophosphate ion was found to be successfully removed through a simple operation, for example, temporary contact of the first non-aqueous electrolytic solution with an oxide solid electrolyte, or co-presence of the first non-aqueous electrolytic solution with the solid electrolyte. The operation itself was found to not adversely affect hexafluorophosphate ion contained in the non-aqueous electrolytic solution or ion conductivity of the non-aqueous electrolytic solution. While the operation is useful for controlling the difluorophosphate ion level of the non-aqueous electrolytic solution, the operation is expected to achieve, for example, the following aspects: allowing a component unstable to difluorophosphate ion to be employed, or useful for suppressing hydrolysis of a non-aqueous electrolytic solution and subsequent decomposition reaction. Consequently, enhancement in rate characteristics and cycle characteristics of a power storage element is expected.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiments, the power storage element 10 has the positive electrode 11 in which the active material layer 13 is provided on one surface of the current-collector 12, and the negative electrode 15 in which the active material layer 17 is provided on one surface of the current-collector 16. However, the present invention is not necessarily limited thereto. It should be apparent for those skilled in the art that the elements of the above embodiments can be applied to, for example, a power storage element which has an electrode layer having the current-collector 12 provided with the active material layer 13 and the active material layer 17 on each surface (i.e., a so-called bipolar electrode). By alternatingly stacking the bipolar electrode and the separator 14, and inserting the stacked product into a case (not illustrated), a so-called power storage element of a bipolar structure can be obtained.

One of the above-described embodiments corresponds the case in which the active material layers 13 and 17 contain the solid electrolyte 18. However, the present invention is not necessarily limited thereto. Needless to say, the solid electrolyte 18 of at least one of the active material layers 13, 17 may be omitted.

Although no description has been made on the above embodiments, needless to say, a protective layer 29 may be disposed between the active material layer 17 and the separators 14, 22, or a protective layer 29 may be disposed between the current-collector 16 and the active material layer 17. By disposing the protective layer 29 between the active material layer 17 and the separators 14, 22, short circuit possibly caused by dendrite can be suppressed. By disposing the protective layer 29 between the current-collector 16 and the active material layer 17, degradation of the current-collector 16 can be suppressed.

### REFERENCE SIGNS LIST

10, 21 power storage element
18 solid electrolyte

## Claims

1. A non-aqueous electrolytic solution containing hexafluorophosphate ion, wherein
a ratio of an integrated value of a peak attributed to difluorophosphate ion observed in a ³¹P nuclear magnetic resonance spectrum to an integrated value of a peak attributed to hexafluorophosphate ion is 0.3% or less.

2. The non-aqueous electrolytic solution according to claim 1,
which has a difluorophosphate ion concentration lower than 250 ppm.

3. The non-aqueous electrolytic solution according to claim 1,
which exhibits an absorbance of 2 or greater at wavelength 300 nm in an ultraviolet visible absorption spectrum measured with an optical path length of 10 mm and at 25°C±2°C.

4. A composition comprising
a non-aqueous electrolytic solution as recited in any of claims 1 to 3, and
an oxide-based solid electrolyte which is in contact with the non-aqueous electrolytic solution and which exhibits an ionic conductivity.

5. A power storage element which includes a non-aqueous electrolytic solution as recited in any of claims 1 to 3.

6. A power storage element which includes a composition as recited in claim 4.

7. A method for producing a non-aqueous electrolytic solution, the method comprising
a preparation step of preparing a first non-aqueous electrolytic solution containing hexafluorophosphate ion, and
a treatment step of bringing an oxide-based solid electrolyte which exhibits an ionic conductivity into contact with the first non-aqueous electrolytic solution, to thereby yield a second non-aqueous electrolytic solution.

8. The non-aqueous electrolytic solution production method according to claim 7, wherein,
when analysis is performed through reverse phase liquid chromatography/mass spectrometry employing of an aqueous solution-based eluent under common conditions, the area of a peak observed at a retention time shorter than the retention time when a peak attributed to hexafluorophosphate ion emerges is larger in the case of the second non-aqueous electrolytic solution than in the case of the first non-aqueous electrolytic solution.

9. The non-aqueous electrolytic solution production method according to claim 7 or 8, wherein,
regarding a self-diffusion coefficient of a cation excepting proton determined through pulsed field gradient nuclear magnetic resonance spectrometry at 25°C±2°C, the self-diffusion coefficient in the second non-aqueous electrolytic solution is 0.9 times or more and 1.1 times or less the self-diffusion coefficient in the first non-aqueous electrolytic solution.

10. The non-aqueous electrolytic solution production method according to claim 7 or 8, wherein,
the second non-aqueous electrolytic solution exhibits an absorbance of 2 or greater at wavelength 300 nm in an ultraviolet visible absorption spectrum measured with an optical path length of 10 mm and at 25°C±2°C.

11. A method for producing a power storage element, the method employing the second non-aqueous electrolytic solution prepared through a non-aqueous electrolytic solution production method as recited in claim 7 or 8.
